# EUROPEAN PATENT APPLICATION

(11) **EP 1 468 844 A1**
(43) Date of publication of application: **20.10.2004**
(21) Application number: 02792012.3
(22) Date of filing: 26.12.2002
(51) Int. Cl.: B60C 9/20, B60C 9/18, B29D 30/38

(54) **PNEUMATIC RADIAL TIRE FOR CONSTRUCTION VEHICLE, BELT LAYER OF THE RADIAL TIRE, AND METHOD OF MANUFACTURING THE RADIAL TIRE**

(30) Priority: 27.12.2001 JP 2001395955
(71) Applicant: Bridgestone Corporation, Tokyo 104-8340 (JP)
(72) Inventor: YOSHIDA, Chihiro c/o BRIDGESTONE CORPORATION, Kodaira-shi, Tokyo 187-8531 (JP)
(74) Representative: Whalley, Kevin
(86) International application number: PCT/JP2002/013633
(87) International publication number: WO 2003/055697

(57) **Abstract**

At least one layer among belt layers having a width corresponding to 0.25-0.5 times a width of a tread is constituted with cord bundles each containing plural steel cords arranged side by side at approximately equal intervals so that a distance between a cord bundle and a steel cord adjacent thereto is made wider than a distance between steel cords in the bundle and an angle of each steel cord with respect to an equatorial plane of the tire is 0-15° and a diameter of the cord is a range of 1.0-6.0 mm, and the cord bundle is constituted by coating each cord forming the bundle with a thin rubber layer and thereafter passing these cords through an inserter to integrally coat with rubber, whereby the occurrence of separation failure at ends of the steel cords is prevented to improve the belt durability.

## Description

### TECHNICAL FIELD

This invention relates to a pneumatic radial tire for construction vehicle preventing a separation failure at belt cord ends in each side edge of a belt layer to bring about an improvement of a belt durability, and a method of manufacturing a belt layer therefor and such a tire.

### BACKGROUND ART

For example, JP-A-9-263107, JP-A-10-244808 and the like disclose that for the purpose of improving the belt durability in the pneumatic radial tire for construction vehicle, a width-narrow belt layer is constituted by plural bundles each made of a plurality of belt cords and a cross angle of the belt cord with respect to an equatorial plane of the tire is made small.

In this case, the formation of the cord bundle is carried out by arranging a plurality of steel cords in a required bundle conformation through an inserter or other cord alignment means and then integrally coating all of the cords with rubber. The thus formed cord bundle is cut every a required length and the cut cord bundles are joined to each other in a widthwise direction to construct a belt material in which each of the cords extends at a required angle with respect to the equatorial plane of the tire.

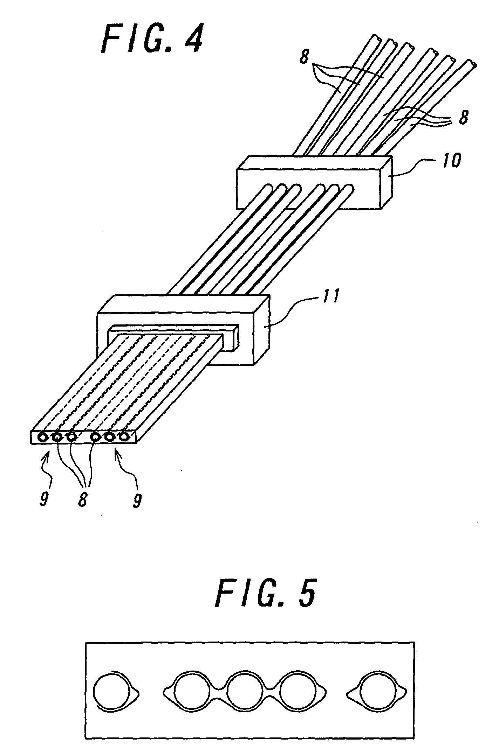

In this conventional technique, however, the plurality of steel cords aligned in the required bundle conformation are directly subjected to a rubber coating through, for example, an extruder for insulation, so that it is difficult to completely surround each cord with the coating rubber over its full circumference because of a large flow resistance of the coating rubber. For example, as shown in FIG. 5, a part(s) not covered with rubber is produced at a side portion(s) of each cord. This is particularly remarkable in the cord bundle having a narrower distance between the cords.

In the cord bundle resulted from such a phenomenon, when such a cord bundle is cut into a given length for the formation of a belt material, filaments of the cord are scattered at a cut end part of the cord in a space surrounded by the coating rubber. This is true even if a plurality of filaments is wrapped with a filament.

Therefore, when a belt layer is formed by the belt material constituted with the above cord bundles, there is a problem in the belt layer that the separation failure from rubber portion is liable to be easily caused at an end portion of the steel cord not sufficiently restrained by the coating rubber, in other words, at a side edge of the belt layer and hence it is difficult to improve the belt durability.

The invention is to solve the above problems of the conventional techniques and to provide a pneumatic radial tire for construction vehicle effectively preventing the separation failure at the side edge of the belt layer and hence at the belt to largely improve the belt durability, and a method of manufacturing the belt layer thereof and the tire.

### DISCLOSURE OF THE INVENTION

The pneumatic radial tire for construction vehicle according to the invention comprises a radial carcass made of one or more carcass plies and a belt arranged at an outer circumferential side of a crown region of the radial carcass and at an inner circumferential side of a tread and made of plural belt layers, in which at least one layer of narrow-width belt layers having a width corresponding to 0.25-0.5 times a width of the tread is constituted with cord bundles each containing plural steel cords arranged side by side at approximately equal intervals so that a distance between a cord bundle and a steel cord nearest thereto is made wider than a distance between the steel cords in the cord bundle and a crossing angle of each steel cord with respect to an equatorial plane of the tire is 0-15° and a diameter of the steel cord is a range of 1.0-6.0 mm, and the cord bundle is formed by coating each of the cords forming the cord bundle with a thin rubber layer, passing these coated cords through a cord alignment means making a required bundle conformation such as an inserter, a comb roll, a press roll or the like and integrally coating them with rubber through an extruder for insulation or the like.

In this case, each steel cord in the cord bundle is subjected to the coating of the thin rubber layer, for example, by a dipping treatment or other treatment, so that a surface unevenness on an outer circumferential surface of the cord comprised of plural filaments is embedded with the thin rubber layer or an uneven quantity thereof is decreased irrespective of a cord conformation that the steel cord comprised of plural filaments is a twisted cord or a non-twisted cord. As a result, when plural cords are aligned through the cord alignment means and then coated with rubber, the flow resistance of the coating rubber in, for example, an insulation die is remarkably decreased as compared with the conventional technique that the filaments are exposed on the outer circumferential surface of the cord.

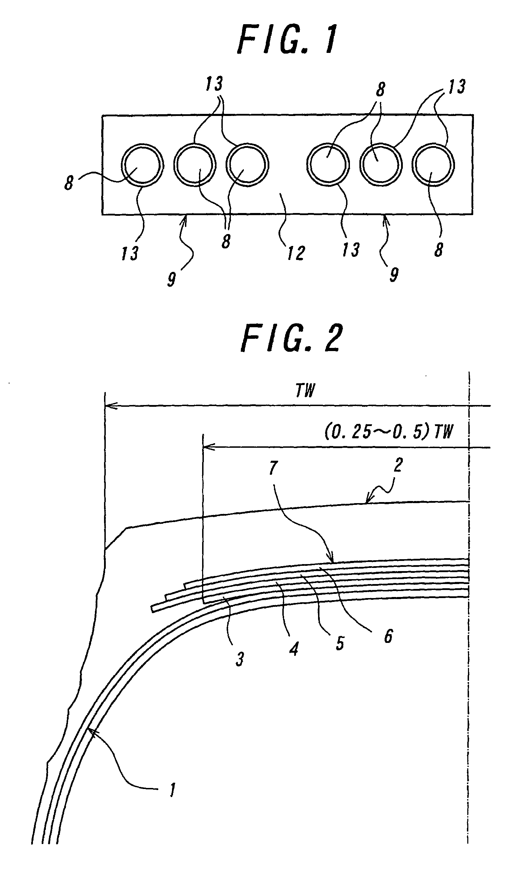

Therefore, as shown by a cross sectional view in FIG. 1, each cord in the cord bundle is surrounded over the whole circumference thereof with the coating rubber through the thin rubber layer and hence the circumference of the cord is equally and tightly restrained with the coating rubber.

To this end, even in the cutting of the cord bundle when the cord bundle is cut into a required length and the cur cord bundles are joined to each other in the widthwise direction to form a belt material, each cord is sufficiently restrained with the coating rubber over the whole circumference and the scattering of the cord filaments is effectively prevented.

This is true irrespective of whether or not each steel cord is wrapped with a filament.

Thus, when one or more narrow-width belt layers are formed by using the belt material obtained by joining the cut cord bundles to each other and an angle of the steel cord in such a belt layer with respect to the equatorial plane of the tire is made as small as 0-15°, the functions as is expected can be sufficiently developed in the narrow-width belt layer to largely improve the belt durability.

In addition, the method of manufacturing the belt layer according to the invention is the manufacture of at least one belt layer in a pneumatic radial tire for construction vehicle according to the invention comprises a radial carcass made of one or more carcass plies and a belt arranged at an outer circumferential side of a crown region of the radial carcass and at an inner circumferential side of a tread and made of plural belt layers, and successively conducts a step of coating each of steel cords with a thin rubber layer and a step of passing these steel cords through a cord alignment means making a required bundle conformation and integrally coating them with rubber.

According to this method, the surface unevenness on the outer circumferential surface of the cord is advantageously decreased by the coating of the each steel cord with the thin rubber layer as mentioned above, whereby the flowability of rubber in the subsequent rubber coating can be largely enhanced and hence the coating rubber can sufficiently be adhered to each of the steel cords over the whole circumference through the thin rubber layer. By constituting the belt layer of the pneumatic radial tire with the cord bundles subjected to the above rubber coating can effectively be prevented the separation failure in the cord end portions located at the side edge of the belt layer.

In this case, it is preferable that the thin rubber layer coated on the steel cord is rendered into a cured layer or a semi-cured layer by vulcanization prior to the integrally rubber coating.

Moreover, the vulcanization can be carried out, for example, by passing the cord coated with the thin rubber layer through a hot tunnel, or by irradiating an electromagnetic wave to the cord to conduct the heating of the cord.

When the thin rubber layer is rendered into the cured layer or the like before the passing of each cord through the cord alignment means, there can be effectively removed a fear of peeling off the thin rubber layer from the cord through the cord alignment means.

On the other hand, when the thin rubber layer is rendered into the cured layer or the like after the passing through the cord alignment means, the cords each coated with the thin rubber layer can be subjected to the vulcanization together, so that there is an advantage that the size of the vulcanizing apparatus becomes smaller or the number thereof becomes fewer. Even in any cases, the collapse of the cord can effectively be prevented.

Furthermore, the method of manufacturing a pneumatic radial tire for construction vehicle according to the invention lies in that the belt layer manufactured according to any one of the aforementioned methods is at least one of belt layers having a width corresponding to 0.25-0.5 times a width of the tread. In this tire, the fear of the separation failure in the cord end portions located at the side edge of the belt layer can be removed by the sufficient adhesion of the coating rubber to the whole circumference of the steel cord to largely improve the belt durability.

### BRIEF DESCRIPTION OF THE DRAWINGS

FIG. 1 is a cross sectional view illustrating a state of coating cord bundles with rubber.
FIG. 2 is a cross sectional view of a main part of an embodiment of the tire according to the invention.
FIG. 3 is a plan view illustrating an extending conformation of cord bundles.
FIG. 4 is a schematically perspective view illustrating an embodiment of a cord bundle conformation.
FIG. 5 is a cross sectional view illustrating the conventional cord bundle.

### BEST MODE FOR CARRYING OUT THE INVENTION

The tire according to the invention as shown by a cross sectional view of a main part in FIG. 2 comprises a radial carcass 1 made of one or more carcass plies and toroidally extending over the respective bead cores not shown and a belt 7 arranged at an outer circumferential side of a crown region of the radial carcass 1 and at an inner circumferential side of a tread 2 and made of plural belt layers, four belt layers 3-6 in this figure.

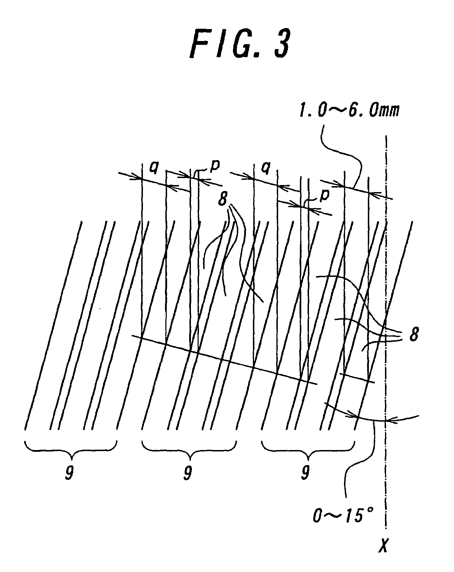

At least one belt layer among belt layers having a width corresponding to 0.25-0.5 times a width TW of the tread, an innermost belt layer 3 in this figure, is constituted with plural cord bundles 9 each containing plural steel cords, three steel cords 8 as shown by a plan view at a state of removing a coating rubber in FIG. 3 arranged side by side at approximately equal intervals so that a distance q between each cord bundle 9 and a steel cord 8 in another cord bundle adjacent thereto or a steel cord not constituting the cord bundle is made wider than a distance p between the steel cords in the cord bundle.

Furthermore, a crossing angle of each steel cord 8 with respect to an equatorial plane X of the tire is 0-15° and a diameter of the cord is a range of 1.0-6.0 mm.

As exemplified by a schematically perspective view in FIG. 4, the cord bundle 9 can be constituted by previously coating each of the steel cords 8 constituting the cord bundle 9 with a thin rubber layer and rendering the thin rubber layer into, for example, a cured layer, and thereafter passing these cords 8 through through-holes of an inserter as a cord alignment means to align them at a required bundle conformation, and then passing through an insulation die 11 provided in a head of an extruder for insulation not shown while maintaining the aligned posture to integrally coat the cords 8 with rubber.

When the cord bundle 9 is constituted in this way, an excellent flowability of a coating rubber in the insulation die is produced under an action of the thin rubber layer and hence the cured layer on the each cord 8, whereby the coating rubber 12 can be sufficiently adhered to the each cord 8 over the whole circumference as shown in FIG. 1.

Moreover, numeral 13 in this figure shows the thin rubber layer and hence the cured layer directly coating the cord 8.

Therefore, when a belt material for the required belt layer is constituted with the above cord bundle 9, even if the cord bundle 9 is cut into a given length, each cord 8 is restrained by the coating rubber 12 through the thin rubber layer 13 over the whole circumference, so that the scattering of filaments constituting the cord is sufficiently prevented at the cut end portion of the cord 8. As a result, when the innermost narrow-width belt layer 3 is made of the belt material formed by joining the cut cord bundles to each other, the separation failure at the side edge of the belt layer 3, in other words, at the cut end portion of the belt layer cords from the rubber can sufficiently be prevented to develop the function inherent to the belt layer 3, and hence the belt durability can effectively be improved.

Although the above explains about a case of conducting the rubber coating on the cord bundle by using the insulation die, it is possible to conduct the rubber coating by using calendar rolls.

### Example

A durability test on a drum based on a TRA standard is carried out with respect to a conventional tire and an example tire having a tire size of 40.00R57 and a belt construction shown in FIG. 2 in which an innermost belt layer is arranged by using five steel cords having a cord construction of 7x(3+9)x0.21+0.15 and a diameter of 2.5 mm as a bundle as shown in Table 1, respectively, to obtain results shown by an index value in Table 2. Moreover, the larger the index value shown in the table, the better the durability.

Also, a scattering ratio in the cutting of the cord bundle is shown in Table 2.

**Table 1**

| | Thin rubber layer | Cord angle | Distance between bundles | Distance between cords in bundle |
|---|---|---|---|---|
| Conventional tire | absence | 5.0° | 2.5 mm | 0.5 mm |
| Example tire | presence | 5.0° | 2.5 mm | 0.5 mm |

**Table 2**

| | Durability on drum (index) | Scattering ratio |
|---|---|---|
| Conventional tire | 100 | 100% |
| Example tire | 122 | 0% |

Moreover, the durability test on the drum is carried out by running the tire inflated under an internal pressure of 700kPa on a drum of 5 m in diameter at a speed of 10 km/h at a state of loading a mass corresponding to 150% of a maximum load capacity to measure a running time until it can not be run due to the trouble of the belt.

In addition, when a tread width of the tire is 950 mm, the width and the cord angle in each of four belt layers are shown in Table 3.

**Table 3**

| | Belt width | Cord angle |
|---|---|---|
| Innermost layer | 190 × 2 (mm) | 5° |
| Second layer | 350 × 2 (mm) | 21° |
| Third layer | 300 × 2 (mm) | 20° |
| Outermost layer | 230 × 2 (mm) | 21° |

As seen from Table 2, the scattering of cord filaments in the cutting of the cord bundle is not caused in the example tire, so that the durability up to the trouble of the belt can largely be improved.

### INDUSTRIAL APPLICABILITY

As seen from the above, according to the invention, each of plural steel cords constituting a bundle is particularly coated with the thin rubber layer prior to the rubber coating, whereby the coating rubber can be adhered to the each cord over the whole circumference to largely improve the belt durability.

## Claims

1. A pneumatic radial tire for construction vehicle comprising a radial carcass made of one or more carcass plies and a belt arranged at an outer circumferential side of a crown region of the radial carcass and at an inner circumferential side of a tread and made of plural belt layers, in which at least one layer of narrow-width belt layers having a width corresponding to 0.25-0.5 times a width of the tread is constituted with cord bundles each containing plural steel cords arranged side by side at approximately equal intervals so that a distance between a cord bundle and a steel cord nearest thereto is made wider than a distance between the steel cords in the cord bundle and a crossing angle of each steel cord with respect to an equatorial plane of the tire is 0-15° and a diameter of the steel cord is a range of 1.0-6.0 mm, and the cord bundle is formed by coating each of the cords forming the cord bundle with a thin rubber layer and passing these coated cords through a cord alignment means making a required bundle conformation to integrally coat them with rubber.

2. A pneumatic radial tire for construction vehicle according to claim 1, wherein the steel cord is a twisted cord or a non-twisted cord of plural filaments.

3. A pneumatic radial tire for construction vehicle according to claim 1 or 2, wherein the steel cord is a cord not wrapped with a filament.

4. A method of manufacturing at least one belt layer in a pneumatic radial tire for construction vehicle comprising a radial carcass made of one or more carcass plies and a belt arranged at an outer circumferential side of a crown region of the radial carcass and at an inner circumferential side of a tread and made of plural belt layers, which comprises successively conducting a step of coating each of steel cords with a thin rubber layer and a step of passing these steel cords through a cord alignment means making a required bundle conformation and integrally coating them with rubber.

5. A method of manufacturing a belt layer in a pneumatic radial tire for construction vehicle according to claim 4, which comprises a step of rendering the thin rubber layer coated on the steel cord into a cured layer or a semi-cured layer by vulcanization prior to the integrally rubber coating.

6. A method of manufacturing a pneumatic radial tire for construction vehicle, in which the belt layer manufactured according to the method of claim 4 or 5 is at least one layer among belt layers having a width corresponding to 0.25-0.5 times a width of the tread.
